(19) Europäisches Patentamt
European Patent Office
Office européen des brevets

(11) Publication number: 0 025 460 B1

(12) EUROPEAN PATENT SPECIFICATION

(45) Date of publication of patent specification: 08.04.87

(51) Int. Cl.$^4$: C 08 G 75/20, C 08 G 65/00, C 08 G 73/10, C 08 G 63/00, C 07 B 37/00

(21) Application number: 79104205.4

(22) Date of filing: 29.10.79

# (54) Coupling of aryl and heteroaryl polyhalides.

(30) Priority: 11.09.79 US 72309

(43) Date of publication of application:
25.03.81 Bulletin 81/12

(45) Publication of the grant of the patent:
08.04.87 Bulletin 87/15

(84) Designated Contracting States:
AT BE CH DE FR GB IT NL SE

(58) References cited:
DE-B-1 745 085
US-A-3 345 332
US-A-3 431 221

The file contains technical information submitted after the application was filed and not included in this specification

(73) Proprietor: AMOCO CORPORATION
200 East Randolph Drive P.O. Box 5910-A
Chicago Illinois 60680 (US)

(72) Inventor: Colon, Ismael
11 Jill Court
Middlesex, NJ (US)
Inventor: Maresca, Louis Michael
RD No. 1, Box 139A
Riverview Terrace, Belle Mead, NJ (US)
Inventor: Kwiatkowski, George Thomas
5 Forrest Lane
Green Brook, NJ (US)

(74) Representative: Barz, Peter, Dr. et al
Patentanwälte Dr. V. Schmied-Kowarzik Dipl.-Ing. G. Dannenberg Dr. P. Weinhold Dr. D. Gudel Dipl.-Ing. S. Schubert Dr. P. Barz
Siegfriedstrasse 8
D-8000 München 40 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 025 460 B1

**Description**

This invention pertains to a method of coupling aryl and heteroaryl polyhalides and more particularly to the use of a catalyst mixture of an anhydrous nickel compound and a ligand in the presence of a reducing metal in a dipolar aprotic solvent.

Reactions which form carbon-carbon bonds are few although they are extremely useful in organic synthesis. In the formation of these bonds involving aryl groups, coupling is usually accomplished through the use of a metal. The use of copper in the Ullmann reaction is described in Chem. Rev. *38*, 139 (1946); *64*, 613 (1964). The use of nickel complexes was described by M. F. Semmelhack, et al. in J. Am. Chem. Soc., *93*, 5908 (1971). The use of palladium complexes was described by F. R. S. Clark, et al, J. Chem. Soc. Perkin I, 121 (1975). The latter reactions with nickel or palladium complexes have the advantage of proceeding at moderate temperatures but are disadvantageous in that aryl chlorides were either completely unreactive or gave very poor yields.

Yamamoto et al. in the Bulletin of the Chemical Society of Japan, 51, 7 (1978) pages 2091—2097 and in JP—A—52-154900/77 describe the polycondensation of di- and polyhalogenated organic compounds via magnesium Grignard reagents in the presence of a transition metal catalyst comprising as ligands triphenylphospine or 2,2'bipyridine to produce polyphenylene type polymers. The catalysts include di- and trivalent compounds such as $NiCl_2$(2,2'-bipyridine), $NiBr_2$(triphenylphosphine)$_2$, $PdCl_2$(2,2'-bipyridine), $NiCl_2$, $CoCl_2$, $FeCl_2$, and $FeCl_3$. The molar ratio of ligands per grammatom of Ni is e.g. 1:1 or 2:1. The reaction is conducted in ether solvents such as tetrahydrofuran, dibutyl ether and diglyme.

In an example e.g. 51 mg of $NiCl_2$(bpy) was added to a mixture of the products obtained by the reaction of 11.8 g (50 mmol) of *p*-dibromobenzene with 1.22 g (50 mg-atom) of magnesium in dry tetrahydrofuran.

The work of Yamamoto, et al. was a stated extension of well-known prior art on the coupling of aromatic Grignard reagents with aryl halides.

This invention is directed to a method of coupling aryl and heteroaryl polyhalides by contacting said aryl and heteroaryl polyhalides, wherein the halide is selected from Cl, Br, or I, or mixtures thereof, in an aprotic solvent with a catalyst mixture comprising an anhydrous nickel compound in the presence of a reducing metal compound at a temperature of from 0 to 250°C, preferably from 25 to 120°C, characterized in that the reaction is carried out in the presence of at least one ligand selected from the group consisting of a triaryl phosphine having 6 to 14 carbons in each aryl moiety and an aromatic bidentate compound containing at least one ring nitrogen atom and 5 to 30 carbon atoms, in the presence of zink or manganese as reducing metals, wherein the ratio of equivalents of nickel to equivalents of aryl or heteroaryl polyhalide is in the range of 0.0001 to 0.5, the amount of ligand is from 0.1 to 100 moles per gram atom of nickel and the amount of reducing metal is at least 0.5 equivalent per equivalent of aryl or heteroaryl polyhalide and that the aprotic solvent is a dipolar aprotic solvent.

This invention provides a novel process for the production of aryl and heteroaryl oligomers and polymers.

It was unexpected that high performance polymers could be produced from aryl and heteroaryl polyhalides at moderate temperatures.

The coupling reaction takes place at temperatures of from 0 to 250°C, preferably from 25 to 120°C, and most preferably from 40 to 80°C.

Pressure is not critical and so superatmospheric or subatmospheric pressures can be used as well as atmospheric pressure. Reaction is carried out in an inert atmosphere.

Reaction time can vary from minutes to as long as several hours. Inorganic salt promoters may be used to reduce reaction times and/or temperatures.

Preferred promoters include alkali, alkaline earth, zinc, magnesium, manganese and aluminum halides, or mixtures thereof. Iodides are particularly preferred. The most preferred promoters are alkali metal iodides, bromides and chlorides. The amount of promoter, when used, can range from 0.1 to 1000 moles per gram atom of nickel with 1 to 100 moles of promoter being preferred. If desired one can also employ alkali, alkaline earth, zinc, magnesium, manganese, and aluminum sulfates or phosphates, or mixtures thereof, as promoters.

Suitable nickel compounds are nickel(O) complexes and those reducible by organometallic and metal reducing agents. These compounds include nickel halides, that is, the chlorides, bromides and iodides, nickel sulfates, nickel phosphates, nickel carbonates, nickel salts of organic acids having 1 to 18 carbons, such as, nickel formate, nickel acetate, and nickel organic complexes such as nickel acetylacetonate and dichloro-bis(triphenylphosphine) nickel (II); and nickel (O) compounds such as bis(1,5-cyclooctadiene) nickel and tetrakis(triphenylphosphine)nickel. The anion of the nickel compounds is unimportant and serves merely to provide nickel ion to the catalyst mixture, but it must not interfere with the reaction of the nickel compound with the ligand. The preferred anions are the halides, chloride being the most preferred.

The preferred ratio of gram atoms of nickel to equivalents of aryl or heteroaryl polyhalide is 0.001 to 0.1.

Suitable triaryl phosphines include triphenylphosphine, triphenylphosphines containing alkyl or alkoxy substituents having up to 8 carbon atoms, and unsubstituted or alkyl- and alkoxy-substituted trinaphthyl phosphines. Suitable bidentate compounds include e.g. 2,2'-bipyridine, 1,10-phenanthroline,

1,8-naphthylpyridine, 2-methylaminopyridine. Preferred ligands are triphenylphosphine and 2,2′-bipyridine.

The ratio of triarylphosphine to nickel can range from 0 to 100, preferably from 1 to 10 moles per gram atom of nickel.

The ratio of bidentate ligand to nickel can range from 0 to 5, preferably from 0.2 to 2, moles of bidentate ligand to gram atom of nickel.

It is preferred to use a combination of triarylphosphine and aromatic bidentate ligand, preferably a mixture of triphenylphosphine and 2,2′-bipyridine, wherein the ratio of triarylphosphine to nickel varies from 1 to 3, and the ratio of bidentate ligand to nickel varies from 0.5 to 2 moles per gram atom of nickel.

The aprotic solvents are dipolar solvents, such as dimethylacetamide, dimethylformamide, dimethylsulfoxide and sulfolane. Dimethylacetamide and dimethylformamide are particularly preferred.

It is preferred that all solvents used in the practice of this invention be anhydrous. To produce high polymers all reagents and solvents should be anhydrous.

Although manganese metal can be used, zinc metal is the preferred metal. It is also preferred that the metal be in finely divided form with an average particle size of 0.83 mm (US sieve 20) or finer.

Although the stoichiometric amount of reducing metal required in this coupling reaction is 0.5 moles of reducing metal per equivalent of aryl or heteroaryl polyhalide, it is preferred to use a 50 percent excess or greater.

While not wishing to be bound by any scientific theory or explanation of the mechanism of the coupling reaction of this invention, it is believed that the combination of nickel compound, ligand and reducing metal provides nickel in a zero valent state, a form which in an anhydrous dipolar aprotic medium enables the coupling of aryl and/or heteroaryl polyhalides to take place in excellent yields.

The nickel (O) ligand complex believed to be the active catalyst can be formed *in situ* in the presence of an aryl and/or heteroaryl polyhalide, or the catalyst can be preformed *in situ* prior to the addition of the aryl and/or heteroaryl polyhalide.

A method for the determination of zero valent nickel is described by C. A. Tolman, J. Am. Chem. Soc. *92*, 2956 (1970).

A wide variety of aryl and heteroaryl polyhalides may be used in the practice of this invention. For example, the polyhalides may be selected from the following formulae:

(I)
$$\begin{array}{c} Y \\ | \\ R(X)_a \end{array}$$

wherein R is an aryl or heteroaryl radical, or combinations thereof, containing 4 to 100 carbon atoms such as phenyl, biphenyl, naphthyl and pyridyl; Y is independently an inert substituent selected from hydrogen, alkyl, aryl, arlkylaryl, arylalkyl, substituted or unsubstituted amino, —CN, —CHO, Oaryl, —Oalkyl, —OCOaryl, —OCOalkyl, —COOalkyl, —COOaryl,

$$\begin{array}{c} O \\ \| \\ —C\text{-alkyl}, \end{array} \begin{array}{c} O \\ \| \\ —C\text{-aryl}, \end{array}$$

—$SO_2$aryl, —$SO_2$-alkyl, —$SO_3$-alkyl, —$SO_3$aryl, wherein the aryl contains 4 to 30 carbon atoms and the alkyl contains 1 to 8 carbon atoms; X is chlorine, bromine, or iodine, and a is 2 or greater;

(II)
$$(X)_b + R—B_n +_m R + X)_b$$

wherein B is independently a direct bond or a divalent radical such as

$$\begin{array}{c} | \\ —NR_1, \end{array} —O—, —S—, —S—S, \begin{array}{c} O \\ \| \\ —C—, \end{array} —SO—, —SO_2—, \begin{array}{c} O \\ \| \\ —OC—O—, \end{array}$$

or alkylene, arylene, alkylarylene, arylalkylene,

$$\begin{array}{c} O \qquad\qquad\quad O \\ \| \qquad\qquad\quad \| \\ —C\text{-alkylene-}C—, \end{array} \begin{array}{c} O \\ \| \\ —N—C—O—, \end{array} \begin{array}{c} O \\ \| \\ —N—C—N—, \end{array}$$

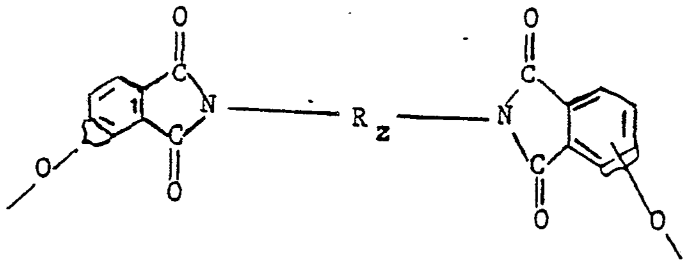

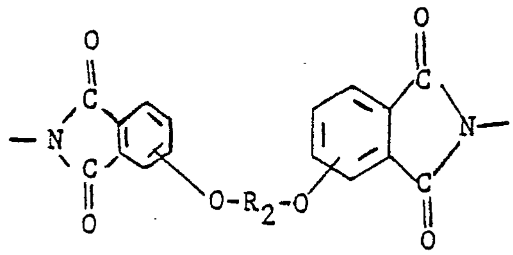

$R_1$ is hydrogen, alkyl, aryl, alkylaryl arylalkyl, wherein the aryl and arylene in $R_1$ and B contain 4 to 30 carbon atoms, and the alkyl and alkylene in $R_1$ and B contain 1 to 20 carbon atoms, n and m are integers of from 1 to 15, $R_2$ is a substituted or unsubstituted divalent radical selected from alkylene, or arylene, b is 1 or greater, X and R are as previously defined;

(III) 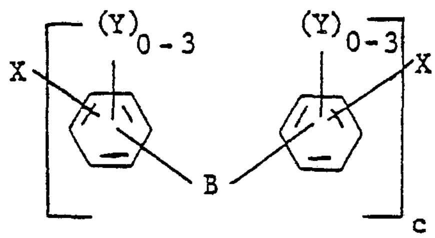

wherein X, Y and B are as previously defined, and preferably B is $-SO_2$,

$$-\overset{O}{\overset{\|}{C}}-, \quad -O-\overset{O}{\overset{\|}{C}}-O,$$

—O—, or alkylidene or alkylene having 1 to 6 carbon atoms, anc c is 1 or 2.

(IV) 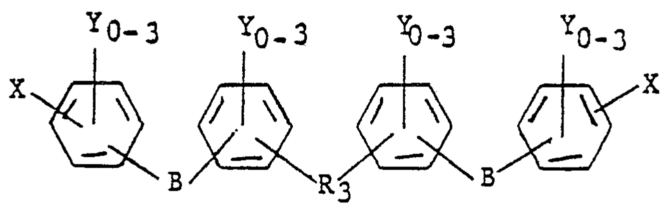

wherein B is as previously defined, and is preferably —O—, —S—, —S—S—,

$$-\overset{O}{\overset{\|}{C}}-, -SO_2-, \quad -O-\overset{O}{\overset{\|}{C}}-O,$$

$R_3$ is a direct bond, —O—, —S—, $-SO_2$, alkylene or alkylidene containing 1 to 6 carbon atoms, preferably $-C(CH_3)_2$, or cycloalkylidene containing 5 to 18 carbon atoms, and X and Y are as previously defined;

(V) 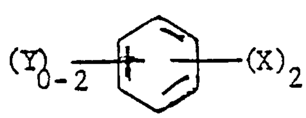

wherein X and Y are as previously defined.

In the polyhalides depicted in formulas (II) to (V), one or more carbon atoms of the benzene rings can be replaced by a hetero atom, such as P or N.

Additionally, the polyhalides should not contain nitro groups or acidic functional groups such as phenols and carboxylic acids. Also, the aryl and heteroaryl polyhalides should not contain two substituents ortho to the halide.

The aryl and heteroaryl polyhalides starting materials can additionally include aryl and heteroaryl monohalides.

The preferred aryl and heteroaryl monohalides are depicted as follows:

(VI) 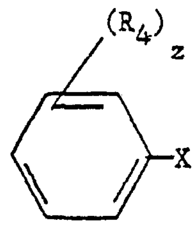

wherein $R_4$ is independently selected from a monovalent inert radical such as alkyl, aryl, F, substituted or unsubstituted amino, —CN, —CHO, —Oaryl, O-alkyl, —OCO-aryl, —OCOalkyl, —COOalkyl, —COOaryl,

$-\overset{O}{\overset{\|}{C}}$-alkyl, $-\overset{O}{\overset{\|}{C}}$-aryl,

—$SO_2$-aryl or —$SO_2$-alkyl, wherein the aryl contains 4 to 30 carbon atoms, the alkyl contains 1 to 8 carbon atoms, and z is an integer having values of 0 to 4, with the proviso that no more than one $R_4$ is in a position ortho to the halide containing ring carbon atom, and X is a halide selected from Cl, B, or I. By inert radicals is meant radicals which do not interfere with the coupling reaction.

Another preferred monohalide compound is a heteroaryl monohalide wherein one or more of the carbon atoms of the benzene ring in formula (VI) is replaced by a hetero atom, such as N or P.

The preferred polyhalides include the following:

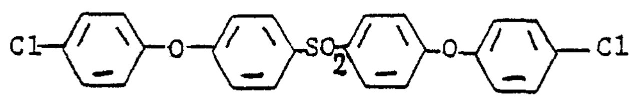

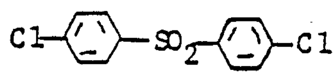

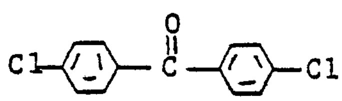

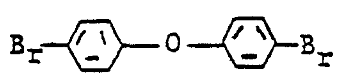

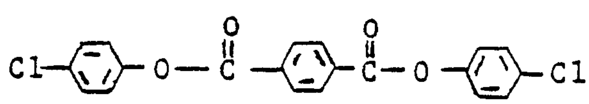

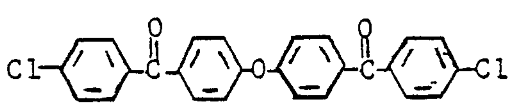

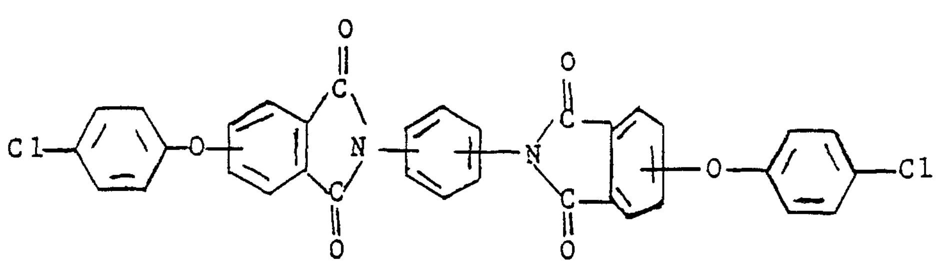

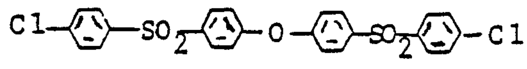

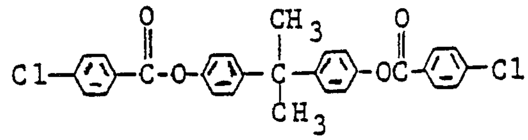

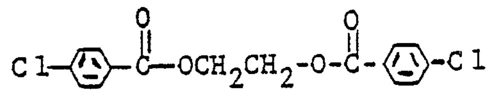

The aryl and heteroaryl polyhalides can be used individually or in combination, or in combination with the aryl and heteroaryl monohalides described, *supra*, and they can be coupled to form a variety of compounds, oligomers, polymers and copolymers. Such polymers include e.g. polycarbonates, polysulfones, polyethersulfones, polyesters, polyarylates, polyurethanes, polyetherimides, and polyimides, and copolymers thereof.

The invention is further described in the examples which follow. All parts and percentages are by weight unless otherwise specified.

### Example 1

This example describes the preparation of a polysulfone by coupling 4,4'-bis(p-chlorophenoxy)-diphenylsulfone of the following formula:

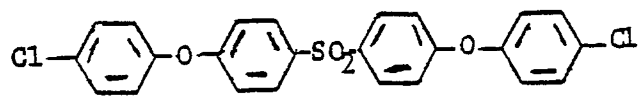

To a 100 ml flask equipped with a magnetic stirring bar were added 0.26 g $NiCl_2$, 0.3 g bipyridine, 1.5 g triphenylphosphine, 2.0 g Zn and 2.0 g NaBr. In a side arm attached to this flask were placed 10 g of 4,4'-bis-(p-chlorophenoxy)diphenylsulfone. The reaction apparatus was sealed, evacuated, and filled with nitrogen. Thirty ml of DMAC (dimethyl acetamide) were added and the mixture was heated to 70°C. To this brown mixture was added 0.28 ml of trichlorobenzene. After 1 hour, the monomer was added to the mixture from the side arm. This mixture was stirred for 7 hours at 70°C during which time the reaction mixture became very viscous. The mixture was filtered and diluted with 10 ml DMAC, and then coagulated in hot acidic methanol solution (10 ml concentration of HCl in 500 ml methanol) in a blender. After stirring in the hot acidic methanol for 1 hour, the white polymer was filtered and washed with several cake volumes of methanol. The polymer was then placed in a vacuum oven (80°C and 20 mbar (15 mm Hg) for about 24 hours) to dry. The polymer had a relative viscosity of 0.60 dl/g (measured at 25°C in N-methyl-2-pyrrolidinone).

The polymer was then pressure molded at 320°C and cut into test bars 0.5 mm (20 mils) thick and tested for tensile modulus, yield strength tensile strength, yield elongation and elongation at break by a procedure similar to ASTM-D638. The results are as follows:

| | |
|---|---|
| Tensile Modulus | 2530 N/mm$^2$ (366,800 psi) |
| Yield Strength | 75 N/mm$^2$ (10,800 psi) |
| Tensile Strength | 75 N/mm$^2$ (10,800 psi) |
| Yield Elongation | 7.3% |
| Elongation at Break | 10% |

### Example 2

This Example describes the preparation of a poly(biphenylsulfone) of the following formula:

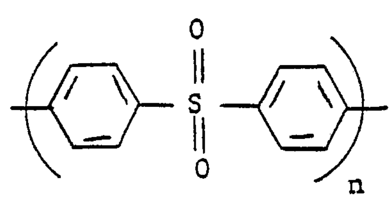

To a 50 ml flask there was added 0.26 g nickel chloride, 2.0 g sodium bromide, 2.0 g triphenylphosphine, 3.0 g zinc dust, and 5.0 g dichlorodiphenylsulfone. The flask was sealed, evacuated, and filled with nitrogen. Thirty ml dry DMAC were added through a serum cap and the mixture was reacted at 100°C with stirring. Within 45 minutes, the polymer began precipitating out of solution turning the brownish solution gray. The reaction mixture was poured into hot acidic methanol (10 ml conc. HCl in 500 ml

methanol) and stirred for 1 hour. The polymer was filtered, washed with methanol, and then placed in a vacuum oven (100°C at 13 mbar (10 mm Hg) for about 24 hours) to dry. The dry polymer had a reduced viscosity of 0.18 dl/g as measured in p-chlorophenol.

Example 3

This Example describes the preparation of a poly(biphenylketone) of the following formula:

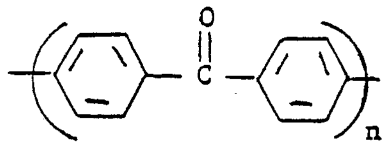

To a 50 ml flask there was added 2.6 g triphenylphosphine, 0.26 g nickel chloride, 2.0 g zinc dust and 2.5 g of 4,4'-dichlorobenzophenone. After a nitrogen atmosphere was introduced, 20 ml DMAC were added by syringe and the mixture was reacted at 70°C with stirring. Within 20 minutes the polymer was precipitating from solution. The polymer was filtered and separated from residual zinc dust by washing in acidic methanol. After filtering and washing, the polymer was dried in a vacuum oven (100°C at 13 mbar (10 mm Hg) for about 24 hours).

Example 4

This Example describes the preparation of a polyarylate by coupling bisphenol-A di-p-chlorobenzoate of the following formula:

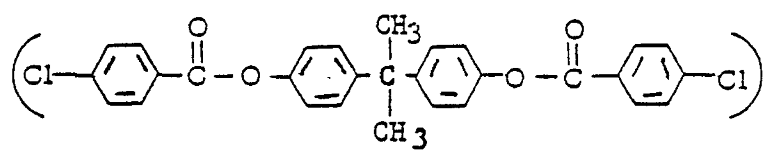

To a 50 ml flask there was added 0.26 g $NiCl_2$, 3.0 g triphenylphosphine, 2.0 g zinc dust, and 2 g of the dichloro compound depicted above. After purging with nitrogen for 45 minutes, 30 ml of dry DMAC were added by syringe and the mixture was stirred at 85°C. The polymer began precipitating from solution within 45 minutes. The reaction was allowed to continue for several hours. The polymer was isolated and dried in a vacuum oven as described in Example 1. The polymer had a reduced viscosity of 0.18 dl/g as measured in N-methyl-2-pyrrolidinone.

Example 5

This Example describes the preparation of a polyarylate by coupling ethylene di-p-chlorobenzoate of the following formula:

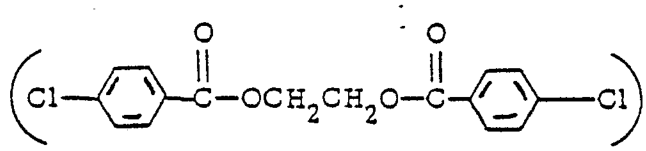

To a 50 ml flask there was added 0.26 g nickel chloride, 2.0 g triphenylphosphine, 3.0 g zinc dust, 2.0 g sodium bromide, and 6.8 g ethylene di-p-chlorobenzoate. Under a nitrogen atmosphere there was added 30 ml DMAC. The reaction was heated to 70°C with stirring. Within 40 minutes the polymer had precipitated from solution. The polymer was isolated and dried in an oven as described in Example 1. The polymer had a reduced viscosity of 0.1 dl/g as measured in N-methyl-2-pyrrolidinone.

Example 6

This Example describes the preparation of a poly(biphenylether).

To a 50 ml flask there was added 0.26 g $NiCl_2$, 3.0 g triphenylphosphine, 1.0 g sodium bromide, 6.0 g Zn, and 10 g 4,4'-dibromophenyl ether. Under a nitrogen atmosphere there was added 30 ml of dry DMAC. The reaction was run at 70°C for 2 hours during which time the polymer precipitated from solution. The insoluble polymer was isolated and dried as described in Example 1.

Example 7

This Example describes the preparation of a copolymer by coupling two different aryl halides.

To a 50 ml flask there was added 0.26 g $NiCl_2$, 2.0 g triphenylphosphine, 2.0 g sodium bromide, and 3.0 g zinc dust. The flask was sealed, evacuated, and filled with nitrogen. Thirty ml of DMAC and 0.4 ml 2-chloropyridine were added by syringe and reacted for 1 hour at 70°C. After this period, 2.5 g of 4,4'-dibromodiphenylether dissolved in 4 ml DMAC was added to the mixture, and over a period of 1 hour, 2.5 g of 4,4'-dichlorodiphenylsulfone dissolved in 4 ml DMAC was added. The polymer began to precipitate from solution even before the addition of the dichlorodiphenylsulfone was complete. The reaction was allowed

to continue for several hours at 70°C. The reaction mixture was poured into acidic methanol solution and heated with stirring for 1 hour. The polymer was then filtered, washed twice with 25 ml portions of methanol, and then placed in a vacuum oven (100°C at 1.3 mbar (1 mm Hg) for about 24 hours) to dry. The polymer was found to be insoluble in solvents.

**Claims**

1. A method for coupling aryl and heteroaryl polyhalides by contacting said aryl and heteroaryl polyhalides, wherein the halide is selected from Cl, Br, or I, or mixtures thereof, in an aprotic solvent with a catalyst mixture comprising an anhydrous nickel compound in the presence of a reducing metal compound at a temperature of from 0 to 250°C, preferably from 25 to 120°C, characterized in that the reaction is carried out in the presence of at least one ligand selected from the group consisting of a triaryl phosphine having 6 to 14 carbons in each aryl moiety and an aromatic bidentate compound containing at least one ring nitrogen atom and 5 to 30 carbon atoms, in the presence of zink or manganese as reducing metals, wherein the ratio of equivalents of nickel to equivalents of aryl or heteroaryl polyhalide is in the range of 0.0001 to 0.5, the amount of ligand is from 0.1 to 100 moles per gram atom of nickel and the amount of reducing metal is at least 0.5 equivalent per equivalent of aryl or heteroaryl polyhalide and that the aprotic solvent is a dipolar aprotic solvent.

2. A method as claimed in claim 1 wherein the reducing metal is a finely divided powder having a particle size of 0.83 mm or finer.

3. A method as claimed in claim 1 or 2 wherein the nickel compound is nickel chloride.

4. A method as claimed in claim 1 to 3 wherein the ligand is preferably triphenyl phosphine or 2,2'-bipyridine.

5. A method as claimed in claims 1 to 3 wherein the ligand is a mixture of a triaryl phosphine and an aromatic bidentate compound, preferably a mixture of triphenyl phosphine and 2,2'-bipyridine.

6. A method as claimed in claims 1 to 6 wherein at least 0.1 moles per gram atom of nickel of an inorganic salt is added as a promoter.

7. A method as claimed in claim 6 wherein the inorganic salt is an alkali metal iodide, bromide or chloride.

8. A method as claimed in claims 1 to 7 wherein the aprotic solvent is dimethylacetamide or dimethyl formamide.

9. A method as claimed in claims 1 to 8 wherein the aryl polyhalide is coupled to form a polyester, a polycarbonate, a polysulfone, a polyether, a polyimide or a polyketone.

**Patentansprüche**

1. Verfahren zur Koppeln von Aryl- und Heteroarylpolyhalogeniden durch Kontaktieren der Aryl- und Heteroarylpolyhalogenide, bei denen das Halogenid ausgewählt ist unter Cl, Br oder J oder Mischungen davon, in einem aprotischen Lösungsmittel mit einem Katalysatorgemisch, das eine wasserfreie Nickelverbindung umfaßt, in Gegenwart einer reduzierenden Metallverbindung bei einer Temperatur von 0 bis 250°C, vorzugsweise 25 bis 120°C, dadurch gekennzeichnet, daß die Reaktion in Gegenwart mindestens eines Liganden, ausgewählt aus der Gruppe, bestehend aus einem Triarylphosphin mit 6 bis 14 Kohlenstoffen in jeder Arylgruppe und einer aromatischen zweizähnigen Verbindung, die mindestens ein Ring-Stickstoffatom und 5 bis 30 Kohlenstoffatome enthält, in Gegenwart von Zink oder Mangan als reduzierenden Metallen durchgeführt wird, wobei das Verhältnis der Äquivalente an Nickel zu den Äquivalenten an Aryl- oder Heteroarylpolyhalogenid im Bereich von 0,0001 bis 0,5 liegt, die Menge an Ligand 0,1 bis 100 Mol pro Gramm-Atom Nickel und die Menge an reduzierendem Metall mindestens 0,5 Äquivalent pro Äquivalent an Aryl- oder Heteroarylpolyhalogenid betragen, und daß das aprotische Lösungsmittel ein dipolares aprotisches Lösungsmittel ist.

2. Verfahren nach Anspruch 1, worin das reduzierende Metall ein feinteiliges Pulver mit einer Teilchengröße von 0,83 mm oder feiner ist.

3. Verfahren nach Anspruch 1 oder 2, worin die Nickelverbindung Nickelchlorid ist.

4. Verfahren nach Anspruch 1 bis 3, worin der Ligand vorzugsweise Triphenylphosphin oder 2,2'-Bipyridin ist.

5. Verfahren nach den Ansprüchen 1 bis 3, worin der Ligand eine Mischung aus einem Triarylphosphin und einer aromatischen zweizähnigen Verbindung ist, vorzugsweise eine Mischung aus Triphenylphosphin und 2,2'-Bipyridin.

6. Verfahren nach den Ansprüchen 1 bis 6, worin mindestens 0,1 Mol pro Gramm-Atom Nickel eines anorganischen Salzes als Promotor zugesetzt werden.

7. Verfahren nach Anspruch 6, worin das anorganische Salz ein Alkalimetalljodid, -bromid oder -fluorid ist.

8. Verfahren nach den Ansprüchen 1 bis 7, worin das aprotische Lösungsmittel Dimethylacetamid oder Dimethylformamid ist.

9. Verfahren nach den Ansprüchen 1 bis 8, worin das Arylpolyhalogenid unter Bildung eines

Polyesters, eines Polycarbonats, eines Polysulfons, eines Polyethers, eines Polyimids oder eines Polyketons gekoppelt wird.

**Revendications**

1. Procédé de couplage de polyhalogénures d'aryle et d'hétéro-aryle par contact desdits polyhalogénures d'aryl et d'hétéro-aryle, dont l'halogénure est choisi entre Cl, Br, I ou leurs mélanges, dans un solvant aprotique, avec un mélange catalyseur comprenant un composé anhydre de nickel en présence d'un composé métallique réducteur, à une température de 0 à 250°C, de préférence de 25 à 120°C, caractérisé en ce que la réaction est conduite en présence d'au moins un ligand choisi dans le groupe comprenant une triarylphosphine ayant 6 à 14 atomes de carbone dans chaque portion aryle et un composé aromatique bidenté contenant au moins un atome d'azote dans le noyau et 5 à 30 atomes de carbone, en présence de zinc ou de manganèse comme métaux réducteurs, le rapport des équivalents de nickel aux équivalents de polyhalogénure d'aryle ou d'hétéro-aryle étant compris dans un intervalle de 0,0001 à 0,5, la quantité de ligand étant de 0,1 à 100 moles par atome-gramme de nickel et la quantité de métal réducteur étant d'au moins 0,5 équivalent par équivalent de polyhalogénure d'aryle ou d'hétéro-aryle, et en ce que le solvant aprotique est un solvant aprotique dipolaire.

2. Procédé suivant la revendication 1, dans lequel le métal réducteur est une poudre finement divisée en particules d'un diamètre égal ou inférieur à 0,83 mm.

3. Procédé suivant la revendication 1 ou 2, dans lequel le composé de nickel est le chlorure de nickel.

4. Procédé suivant les revendications 1 à 3, dans lequel le ligand est de préférence la triphénylphosphine ou la 2,2'-bipyridine.

5. Procédé suivant les revendications 1 à 3, dans lequel le ligand est un mélange d'une triarylphosphine et d'un composé aromatique bidenté, de préférence un mélange de triphénylphosphine et de 2,2'-bipyridine.

6. Procédé suivant les revendications 1 à 5, dans lequel on ajoute comme promoteur au moins 0,1 mole d'un sel inorganique par atome-gramme de nickel.

7. Procédé suivant la revendication 6, dans lequel le sel inorganique est un iodure, bromure ou chlorure de métal alcalin.

8. Procédé suivant les revendications 1 à 7, dans lequel le solvant aprotique est le diméthylacétamide ou le diméthylformamide.

9. Procédé suivant les revendications 1 à 8, dans lequel le polyhalogénure d'aryle est couplé pour former un polyester, un polycarbonate, une polysulfone, un polyéther, un polyimide ou une polycétone.